# EUROPEAN PATENT SPECIFICATION

(11) **EP 3 610 416 B1**
(45) Date of publication and mention of the grant of the patent: **16.02.2022**
(21) Application number: 18714280.7
(22) Date of filing: 05.04.2018
(51) Int. Cl.: G06K 19/077, H01B 1/00

(54) **RFID TAG**
RFID-ETIKETT
ÉTIQUETTE RFID

(30) Priority: 11.04.2017 EP 17165944
(43) Date of publication of application: 19.02.2020
(73) Proprietor: NV Bekaert SA, 8550 Zwevegem West Vlaanderen (BE)
(72) Inventor: DROSSAERT, Geert, 2640 Mortsel (BE); MAES, Ruben, 9040 Sint-Amandsberg (BE)
(74) Representative: Zhang, Li
(86) International application number: PCT/EP2018/058665
(87) International publication number: WO 2018/189013

(56) References cited:
- EP-A2- 0 298 518
- WO-A1-2013/045254
- CH-A5- 578 236
- DE-A1- 2 550 703
- DE-A1- 10 330 862
- DE-A1-102008 046 338
- US-A- 3 238 025
- US-A- 3 474 187
- US-A- 4 090 873
- US-A- 4 598 473
- US-A1- 2008 074 272
- US-A1- 2008 158 072
- US-A1- 2009 100 575
- US-A1- 2010 001 078
- US-A1- 2015 206 043
- US-A1- 2016 148 086

## Description

### Technical Field

The invention relates to the field of RFID tags.

### Background Art

WO2014/204322A1 discloses an RFID tag particularly suitable for use as linen or laundry tag. The RFID tag in a specific embodiment comprises a backing layer, a first adhesive layer overlaying the backing layer, an RFID transponder and antenna overlaying the first adhesive layer, and a second adhesive layer overlaying the RFID transponder and antenna. The layers are laminated together, hermetically sealing the RFID transponder and antenna within the RFID tag. In a preferred embodiment, the antenna comprises an elongated multi-strand stainless steel wire, e.g. having 49 strands. The wire is preferably between 0.3 and 0.5 mm in diameter, and encapsulated in a nylon or other polymer insulation. Such a multi-strand wire structure measuring 0.3 - 0.5 mm in diameter with 49 strands has been found to have sufficient flexibility and be less prone to kinking than prior art antennas. The antenna can be stitched to a reinforced adhesive layer prior to lamination. The stitching may comprise a cotton, polyester-cotton, or other substantially durable thread, and preferably holds the antenna in position during lamination and, in combination with the reinforced adhesive layer, subsequent use of the RFID tag.

US2014209690A1 describes RFID tags wherein the antenna can be a stainless steel wire or a copper wire, with a diameter of 0.02 - 0.045 mm.

US2016/0148086 relates to an RFID tag for use with linen or laundry. A dipole antenna consisting of an elongate multi-strand stainless steel wire is inductively connected to a chip.

DE10330862 discloses an electrical cable to withstand high temperatures, having coated wires for the conductor covered by two wound insulation layers within a metal mantle pipe.

DE2550703 discloses cooking utensils with high heat-transfer - having a core of copper sheet covered with aluminium and stainless steel

DE102008046338 deals with an RFID tag for use with clothing. Its antenna consists of a number of strands, each strand being formed by a textile material covered with a copper wire. The strands, together from an antenna which has a conductive coating made of silver.

US2010/001078 discloses a transponder unit having a chip connected to an antenna. The antenna consists of a strand of high tensile steel wires surrounded by a copper conductor.

US4598473 discloses an electric component such as a rectifier in which the electric leads are formed from composite wire material. The wire material has a copper core surrounded by and metallurgically bonded to a layer of ferrous material such as steel having optimal concentricity which layer is in turn surrounded by and metallurgically bonded to a layer of copper.

US3238025 discloses a composite electrical conductor used for high temperature service. The composite electrical conductor comprises a copper core, a metal barrier layer surrounding said core selected from the group consisting of niobium, tantalum, and titanium, and a high temperature oxidation resistant metallic sheath selected from the group consisting of nickel and nickel alloys surrounding said barrier layer.

### Disclosure of Invention

The invention is defined by claim 1. Preferred embodiments are set out in the dependent claims.

The RFID tag of the invention has the benefit that its presence is less noticed in clothing. This leads to fewer nuisances in the clothing manufacturing process and a better comfort for the person wearing the clothing product comprising such RFID tag. The presence of the RFID tag is less noticed, thanks to the combined features of the antenna of the RFID tag. The antenna is thin and flexible while providing its functionality as antenna in an optimum way thanks to its good electrical conductivity. It is a further benefit that the RFID tag comprises an antenna that is very durable, it resists very well to laundry processes and can withstand multiple bending.

The metal wire or metal wires used in the invention can be made according to the known techniques strip cladding or insertion of a wire in a tube. In the technique of strip cladding, a strip of stainless steel is shaped into a tube form around a core wire out of first metal; after shaping into tube form, the strip is closed via welding. Alternatively the layer out of stainless steel can be applied by inserting a core wire out of first metal in a tube out of stainless steel and closing the tube thereafter around the core wire by conventional drawing techniques known by the person skilled in the art.

After applying any of the techniques that allow the application of the layer of stainless steel around the core, the metal wire can be drawn to the final diameter by means of known wire drawing processes.

In a preferred embodiment the antenna yarn comprises - and preferably consists out of a strand of metal wires. The strand can be cabled or twisted together; or can comprise parallel wires without twist and without cabling. When the stand is cabled or twisted, preferably the number of turns per meter length with which the stand is cabled or twisted is less than 120 turns per meter, more preferably less than 100 turns per meter.

Preferably, the antenna has a diameter less than 250 µm. The smaller the antenna, the less the RFID tag will be noticeable to its user.

In a preferred embodiment wherein the antenna comprises a strand of metal wires; the ratio of the area of the core to the area of the sheath layer out of stainless steel is more than 1.2; and preferably more than 1.5; even more preferably more than 2.

Preferably, the antenna comprises a strand of metal wires; and the metal wires have a diameter less than 30 µm; preferably less than 25 µm. Fine wires provide closer packing in the antenna, such that the RFID tag is less noticed by its user, e.g. of RFID tags on labels in clothing.

In a preferred embodiment, the antenna comprises one or a plurality of metal wires; and a polymer monofilament or a polymer yarn. The metal wire of the plurality of metal wires; and the polymer monofilament of the polymer yarn can be combined into a cable by means of twisting or cabling, preferably with less than 120 turns per meter twist, more preferably with less than 100 turns per meter twist. It is a benefit of such antenna that a higher strength antenna is obtained. Preferred polymer yarns for use in such embodiments of the invention are aramid yarns - more preferably para-aramid yarns (e.g. as known under the trademark Kevlar) -, polyester yarns - more preferably high tenacity polyester yarns -, polyamide yarns - more preferably high tenacity polyamide yarns -, high-tenacity polyethylene yarns (e.g. as known under the trademark Dyneema), or a multifilament yarn spun from liquid crystal polymer (e.g. a multifilament yarn known under the trademark Vectran).

The antenna can e.g. be coupled to the transponder chip in an inductive way, or physically, e.g. via soldering.

Preferably, the metal wire or metal wires have a circular cross section. More preferably, the core has a circular cross section and the sheath layer out of stainless steel is concentric with the core.

The metal wires have a hexagonal cross section. Such cross section provides the benefit that a closer packing of the metal wires in the antenna is obtained; synergistically contributing to an RFID tag that is less noticed by the user; e.g. of RFID tags put on a label in clothing. More preferably the metal wires have a diameter less than 30 µm; preferably less than 25 µm.

Preferably, the diameter of the metal wire or of the metal wires is less than 200 µm. more preferably less than 150 µm. even more preferably less than 120 µm.

Preferably, the diameter of the metal wire or of the metal wires is more than 40 µm, more preferably more than 60 µm, even more preferably more than 70 µm.

Preferably, in the cross section of the metal wire(s); the ratio of surface area of the core to the surface area of the sheath layer out of a stainless steel is between 1.5 and 0.25, preferably between 1.25 and 0.4; more preferably between 1 and 0.4. Because of this minimally required thickness of the layer out of stainless steel, the layer of stainless steel provides functionality beyond just a surface layer; e.g. beyond a surface layer for corrosion resistance only; but has a significant effect on mechanical and electrical properties of the antenna, thereby synergistically contributing to the beneficial effects.

In a preferred embodiment, the antenna comprises a strand of metal wires; and the ratio of the area of the core to the area of the sheath layer out of stainless steel is more than 1.2; preferably more than 2; more preferably more than 3.

Preferably, the antenna comprises an insulating polymer layer surrounding the metal wire or the strand.

Preferably, an insulating polymer layer is provided by a wrap of one or of a plurality of yarns; or the insulating polymer layer is provided by a wrap of one or of a plurality of polymer tapes. Such embodiments provide an effective insulation while providing a thin antenna. Furthermore, such antenna has a more textile character. The antenna is even thinner when the insulating polymer layer is provided by one or by a plurality of insulating polymer tapes. Preferably, polyester tapes, polypropylene tapes or polyethylene tapes are used.

More preferably, the yarn or yarns, or the tape or tapes is/are wrapped around the metal wire or around the strand with more than 1000 turns per meter length of the metal wire or of the strand. Preferred material for the insulating wrap is a polyester yarn or polyester yarns. Even more preferred are texturized polyester yarns, more preferably non-entangled texturized polyester yarns.

A tape is a particular type of monofilament yarn: a tape has a cross section that is substantially flat, showing a thickness and a width. Preferred tapes for use in the invention have a width over thickness ratio of the cross section of at least 10, preferably at least 15. Preferably, the width over thickness ratio of the tapes is lower than 50, more preferably lower than 35. Preferred is where the windings of the tape are not overlapping, but touching each other in subsequent turns of wrapping.

Such tapes in polyester, polyamide, polyolefin (e.g. polyethylene or polypropylene) can be used. Polyester tapes are preferred however, thanks to their interesting combination of properties.

Preferred tapes have a cross section with a thickness between 10 and 40 µm, more preferably between 10 and 25 µm, even more preferably between 12 and 25 µm. Preferably the width of the cross section of the tape is at least 100 µm, more preferably at least 200 µm, even more preferably at least 300 µm. Preferably the width of the tape is less than 500 µm.

Specific examples of cross sections of tapes that can be used in the invention are e.g. 250 µm by 12 µm, 350 µm by 12 µm, 370 µm by 12 µm and 250 µm by 23 µm, e.g. in polyester.

Wrapping yarns that can be used in the invention are e.g. multifilament yarns, spun fiber yarns or monofilaments. Preferred multifilament wrapping yarns are texturized multifilament yarns, e.g. polyester multifilament yarns. More preferred are non-entangled texturized multifilament yarns, because they provide best coverage.

Preferably, an insulating polymer layer is provided by a wrap of one or of a plurality of yarns; or the insulating polymer layer is provided by a wrap of one or of a plurality of polymer tapes. The metal wire or the strand is wrapped by a first yarn or by a first tape in S-direction; and the metal wire or the strand is wrapped by a second yarn or by a second tape in Z-direction. Such embodiments provide a particularly effective insulation on the antenna. The direction of wrapping of yarns is indicated by the capital letters S or Z. The wrapping is in S-direction if when the wrapped yarn is held vertically, the wrapping spirals slope in the same direction as the middle portion of the letter S. The wrapping is in Z-direction if when the wrapped yarn is held vertically, the wrapping spirals slope in the same direction as the middle portion of the letter Z.

More preferably, the number of turns per meter with which the first yarn or first tape is wrapped around the metal wire or around the strand is the same as the number of turns per meter with which the second yarn or second tape is wrapped around the metal wire or around the strand. The advantage of such embodiments is that a more stable antenna is obtained.

Preferred material for the insulating wrap is polyester yarn or polyester yarns. Even more preferred are texturized polyester yarns.

Preferably, an insulating polymer layer is provided by a polymer coating, e.g. an extruded polymer coating or a lacquer coating. The insulating polymer coating can e.g. be PVC, PVA, PTFE, FEP, MFA, PFA or PU. Preferably, the thickness of the electrical insulation should not be too thin and not be too thick. If too thin, it is hard to obtain a complete coverage of the filament with the coating. If too thick, the flexibility of the filament decreases. Preferably, the thickness of the insulation coating is between 1 µm and 10 µm. More preferably, the insulation coating is between 3 µm and 7 µm thick. In more preferred embodiments, an extruded coating has a thickness more than 0.1 mm, e.g. more than 0.2 mm; more preferably less than 0.3 mm.

The invention has the additional synergistic benefit that the antenna does not provide a signal when a sensor employing a magnetic field is used; e.g. for the detection of metal parts, e.g. needles, during or after clothing manufacturing. Consequently, less nuisance is created in the manufacturing process of clothing comprising the RFID tag. More preferably, the first metal is copper or a copper alloy. Preferably, the stainless steel layer has an end drawn microstructure. With an end drawn microstructure is meant a microstructure which comprises substantially non-equiaxed grains. Preferred embodiments have in the cross section of the metal wire or metal wires; a ratio of surface area of the core to the surface area of the layer out of stainless steel between 1 and 0.4, more preferably between 0.8 and 0.4.. In a preferred embodiment, the sheath layer out of stainless steel has an annealed microstructure. An annealed microstructure is a recrystallized microstructure which comprises substantially equiaxed grains. Annealing can be performed by a heat treatment process in which the stainless steel is heated to above its recrystallization temperature, maintaining a suitable temperature during a certain period of time, and then cooling. The annealing process removes martensite formed during drawing of stainless steel and recrystallizes the stainless steel, resulting in substantially equiaxed grains.

The stainless steel can be selected from the AISI 300 series such as AISI 302, 304, 316 or 316L, AISI 400 series such as AISI 430, AISI 625 or AISI 904. Particularly preferred are AISI 316 and AISI 316L. The first metal has electrical conductivity higher than stainless steel, e.g. copper or a copper alloy.

Another aspect of the invention is a label comprising a textile carrier and an RFID tag as in the first aspect of the invention. The RFID tag is bonded onto the textile carrier. In a preferred embodiment, the antenna is integrated into or onto the textile carrier by means of textile yarns. More preferably, the antenna is integrated into the textile carrier, e.g. by means of a weaving, knitting or embroidery process. The antenna can e.g. be integrated onto the textile carrier by means of one or a plurality of stitching yarns. The antenna can e.g. be integrated into or onto the textile carrier by fixing the antenna between knitting yarns. The antenna can e.g. be integrated into or onto a woven textile carrier by fixing the antenna yarns between weft and warp yarns of the woven textile carrier.

Another aspect of the invention is an apparel product comprising an RFID tag as in any embodiment of the first aspect of the invention; or comprising a label as in any embodiment of the second aspect of the invention. Preferably, the label is attached to the apparel product.

### Brief Description of Figures in the Drawings

Figure 1 shows the cross section of a metal wire as can be used in the invention.
Figure 2 shows the section in a plane through and along the axis of an antenna for an RFID tag according to the first aspect of the invention.
Figure 3 shows a textile label comprising an RFID tag fixed onto it.

### Mode(s) for Carrying Out the Invention

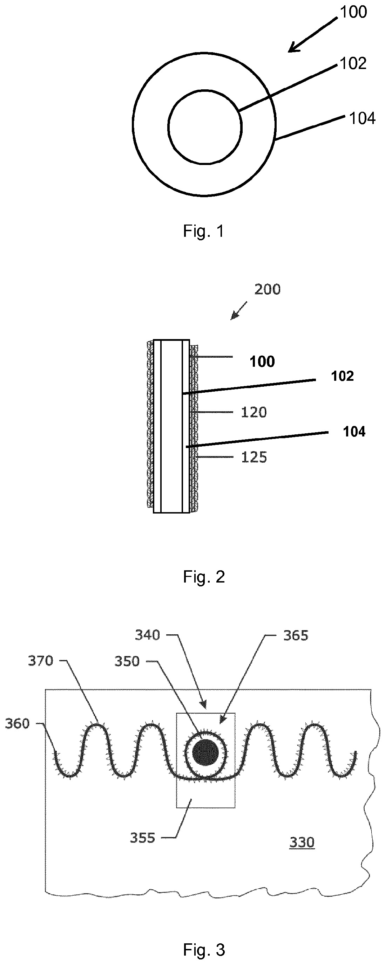

Figure 1 shows the cross section of a metal wire 100 as can be used in the antenna for an RFID tag according to the invention. The metal wire 100 comprises a core 102 out of a first metal, e.g. copper. The core 102 is over its full circumference surrounded by a sheath layer 104 out of stainless steel, e.g. AISI 316 stainless steel. In the example, the cross section of the metal wire 100 is circular; and the core 102 has a circular cross section, provided concentrically with the cross section of the metal wire 100. As an example, the diameter of the metal wire is 100 µm, with a diameter 60 µm of the core out of copper; consequently in the cross section of the metal wire; the ratio of surface area of the core to the surface area of the layer out of stainless steel is 0.56.

Figure 2 shows the section **200** in a plane through and along the axis of an exemplary antenna for an RFID tag according to the first aspect of the invention. The exemplary RFID-antenna has been made using a metal wire **100** as in figure 1. The metal wire **100** comprises a core **102** out of a first metal, e.g. copper. The core 102 is over its full circumference surrounded by a layer **104** out of stainless steel. A first wrapping yarn 120 is wrapped in Z-direction around the metal wire. A second wrapping yarn **125** is wrapped in S-direction around the metal wire. The wrapping yarns **120** and **125** create a full coverage of the surface of the antenna. As an example the wrapping yarns **120**, **125** can be 167 dTex (= 16.7 Tex) non-entangled texturized polyester multifilament yarns, wrapped with 1250 turns per meter length of the metal wire **100** around the metal wire **100**. The wrapping non-entangled texturized polyester multifilament yarns cover the full surface of the antenna.

Alternatively, tapes can be used to wrap the metal wire of the antenna. Specific examples of cross sections of tapes that can be used in the invention are e.g. 250 micrometer by 12 micrometer, 350 micrometer by 12 micrometer, 370 micrometer by 12 micrometer and 250 micrometer by 23 micrometer, e.g. in polyester.

As an alternative to wrapping with yarns or with tape, an insulating polymer coating can be extruded on the metal wire, e.g. a PA polymer coating.

Figure 3 shows a textile label **330** and an RFID tag **340** according to the first aspect of the invention fixed onto the textile label. The RFID tag **340** comprises a transponder chip **350** and an antenna **360** as in the first aspect of the invention, e.g. the exemplary antenna of figure 2. The antenna **360** is positioned undulating on the textile label and forms in the middle of its length a loop **365** with overlapping ends. The antenna **360** is inductively coupled to the transponder chip **350**. The RFID tag **340** is fixed onto the textile label. The antenna **360** is fixed onto the textile label **330** by means of one or more than one stitching yarns **370**. The transponder chip **360** is fixed onto the textile label by means of an, e.g. transparent, laminating foil **355**. Alternatively, the transponder chip can e.g. be fixed onto the textile label by means of epoxy blob or glue.

An alternative example of antenna that can be used in the RFID tag according to the invention - e.g. in the exemplary tag shown in figure 3 - comprises a strand of three metal wires as antenna. The three metal wires are twisted together with 80 turns per meter. Each of the three metal wires has diameter 80 µm, with a diameter 48 µm of the core out of copper; and a surrounding layer of 16 µm thickness of stainless steel. The soformed antenna comprises a wrap in S- and in Z- direction - with 1250 turns per meterwith 167 dtex texturized polyester multifilament yarn to provide an insulating polymer layer on the antenna. As an alternative to the yarns wrapped around the strand of metal wires, a polymer extrusion coating can be applied to the strand; e.g. a PA coating of 0.12 mm thickness.

An alternative example of antenna that can be used in the RFID tag according to the invention - e.g. as in the exemplary tag shown in figure 3 - comprises a metal wire twisted together with a multifilament para-aramid yarn, e.g. twisted together with 80 turns per meter. This way, a higher strength antenna yarn is obtained. The metal wire has 100 µm diameter, with a diameter 60 µm of the core out of copper; and a surrounding layer of 40 µm thickness of stainless steel. The antenna comprises a wrap in S- and in Z-direction with 167 dtex texturized polyester multifilament yarn to provide an insulating polymer layer on the antenna.

## Claims

1. RFID tag (340), comprising
- a transponder chip (350); and
- an antenna (360);
wherein the antenna (360) is coupled to the transponder chip (350);
wherein the antenna (360) comprises a strand of metal wires (100);
wherein the metal wires (100) comprise a core - sheath structure;
wherein the core - sheath structure comprises a core (102) and a sheath layer (104);
wherein the core (102) is made of a first metal,
wherein the core is over its full circumference surrounded by the sheath layer (104);
**characterized in that** the sheath layer is made of a stainless steel; and
wherein the first metal has an electrical conductivity higher than that of the stainless steel, and
wherein the metal wires have a hexagonal cross section.

2. RFID tag (340) as in claim 1, wherein the antenna (360) has a diameter less than 250 µm.

3. RFID tag (340) as in any of the preceding claims, wherein the ratio of the cross-section area of the core (100) to the cross-section area of the sheath layer of stainless steel is more than 1.2.

4. RFID tag (340) as in any of the preceding claims, wherein the metal wires (100) have a diameter less than 30 µm.

5. RFID tag (340) as in any of the preceding claims,
wherein the antenna (360) comprises an insulating polymer layer surrounding the metal wire (100) or the strand of metal wires.

6. RFID tag (340) as in claim 5, wherein the insulating polymer layer is provided by a wrap of one or of a plurality of yarns (120,125); or wherein the insulating polymer layer is provided by a wrap of one or of a plurality of polymer tapes.

7. RFID tag (340) as in claim 6,
wherein the yarn or yarns (120,125), or the tape or tapes is/are wrapped around the metal wire (100) or around the strand with more than 1000 turns per meter length of the metal wire or of the strand.

8. RFID tag (340) as in any of the preceding claims 6 or 7,
wherein the metal wire (100) or the strand is wrapped by a first yarn (125) or by a first tape in S-direction;
and wherein the metal wire or the strand is wrapped by a second yarn (120) or by a second tape in Z-direction.

9. RFID tag (340) as in claim 8, wherein the number of turns per meter with which the first yarn (125) or first tape is wrapped around the metal wire or around the strand is the same as the number of turns per meter with which the second yarn (120) or second tape is wrapped around the metal wire or around the strand.

10. RFID tag (340) as in claim 5, wherein the insulating polymer layer is provided by a polymer coating.

11. RFID tag (340) as in claim 1 - 10,
wherein the first metal is copper or a copper alloy.

12. Label (330) comprising
- a textile carrier; and
- an RFID tag (340) as in any of the preceding claims,
wherein the RFID tag (340) is bonded onto the textile carrier.

13. Label (330) as in claim 12, wherein the antenna (360) is integrated into the textile carrier by means of a weaving, knitting or embroidery process.

14. Apparel product,
comprising an RFID tag (340) as in any of the preceding claims 1 - 11; or
comprising a label (330) as in claims 12 or 13.

## Patentansprüche

1. RFID-Etikett (340), umfassend
- einen Transponderchip (350); und
- eine Antenne (360);
wobei die Antenne (360) mit dem Transponderchip (350) gekoppelt ist;
wobei die Antenne (360) eine Litze aus Metalldrähten (100) umfasst;
wobei die Metalldrähte (100) eine Kern-Mantel-Struktur aufweisen;
wobei die Kern-Mantel-Struktur einen Kern (102) und eine Mantelschicht (104) umfasst;
wobei der Kern (102) aus einem ersten Metall hergestellt ist,
wobei der Kern über seinen vollen Umfang von der Mantelschicht (104) umgeben ist;
**dadurch gekennzeichnet, dass**
die Mantelschicht aus einem Edelstahl hergestellt ist; und
wobei das erste Metall eine höhere elektrische Leitfähigkeit als die des Edelstahls aufweist, und
wobei die Metalldrähte einen hexagonalen Querschnitt aufweisen.

2. RFID-Etikett (340) nach Anspruch 1, wobei die Antenne (360) einen Durchmesser von weniger als 250 µm aufweist.

3. RFID-Etikett (340) nach einem der vorhergehenden Ansprüche, wobei das Verhältnis der Querschnittsfläche des Kerns (100) zu der Querschnittsfläche der Mantelschicht aus Edelstahl größer als 1,2 ist.

4. RFID-Etikett (340) nach einem der vorhergehenden Ansprüche, wobei die Metalldrähte (100) einen Durchmesser von weniger als 30 µm aufweisen.

5. RFID-Etikett (340) nach einem der vorhergehenden Ansprüche, wobei die Antenne (360) eine isolierende Polymerschicht aufweist, die den Metalldraht (100) oder die Litze von Metalldrähten umgibt.

6. RFID-Etikett (340) nach Anspruch 5, wobei die isolierende Polymerschicht durch eine Einwicklung von einem oder einer Vielzahl von Garnen (120, 125) bereitgestellt wird; oder wobei die isolierende Polymerschicht durch eine Einwicklung von einem oder einer Vielzahl von Polymerbändern bereitgestellt wird.

7. RFID-Etikett (340) nach Anspruch 6,
wobei das Garn oder die Garne (120, 125) oder das Band oder die Bänder um den Metalldraht (100) herum oder um die Litze mit mehr als 1000 Windungen pro Längenmeter des Metalldrahts oder der Litze herumgewickelt ist bzw. sind.

8. RFID-Etikett (340) nach einem der vorhergehenden Ansprüche 6 oder 7,
wobei der Metalldraht (100) oder die Litze durch ein erstes Garn (125) oder durch ein erstes Band in S-Richtung umwickelt ist;
und wobei der Metalldraht oder die Litze durch ein zweites Garn (120) oder durch ein zweites Band in Z-Richtung umwickelt ist.

9. RFID-Etikett (340) nach Anspruch 8, wobei die Anzahl von Windungen pro Meter, mit der das erste Garn (125) oder das erste Band um den Metalldraht herum oder um die Litze herumgewickelt ist, dieselbe ist wie die Anzahl von Windungen pro Meter, mit der das zweite Garn (120) oder das zweite Band um den Metalldraht herum oder um die Litze herumgewickelt ist.

10. RFID-Etikett (340) nach Anspruch 5, wobei die isolierende Polymerschicht durch eine Polymerbeschichtung bereitgestellt ist.

11. RFID-Etikett (340) nach Anspruch 1 - 10,
wobei das erste Metall Kupfer oder eine Kupferlegierung ist.

12. Kennzeichnungselement (330), umfassend
- einen textilen Träger; und
- ein RFID-Etikett (340) nach einem der vorhergehenden Ansprüche,
wobei das RFID-Etikett (340) auf den textilen Träger gebondet ist.

13. Kennzeichnungselement (330) nach Anspruch 12, wobei die Antenne (360) durch ein Web-, Strick- oder Stickprozess in den textilen Träger integriert ist.

14. Bekleidungsprodukt,
umfassend ein RFID-Etikett (340) nach einem der vorhergehenden Ansprüche 1 - 11; oder
umfassend ein Kennzeichnungselement (330) nach Anspruch 12 oder 13.

## Revendications

1. Étiquette RFID (340) comprenant :
- une puce de transpondeur (350) ; et
- une antenne (360) ;
où l'antenne (360) est couplée à la puce de transpondeur (350) ;
où l'antenne (360) comprend un toron de fils métalliques (100) ;
où les fils métalliques (100) comprennent une structure de type âme-gaine ;
où la structure de type âme-gaine comprend une âme (102) et une couche de gaine (104) ;
où l'âme (102) est constituée d'un premier métal,
où l'âme est entourée sur toute sa circonférence par la couche de gaine (104) ;
**caractérisée en ce que** :
la couche de gaine est constituée d'un acier inoxydable ; et
où le premier métal a une conductivité électrique supérieure à celle de l'acier inoxydable, et
où les fils métalliques ont une section transversale hexagonale.

2. Étiquette RFID (340) selon la revendication 1, dans laquelle l'antenne (360) a un diamètre inférieur à 250 µm.

3. Étiquette RFID (340) selon l'une quelconque des revendications précédentes, dans laquelle le rapport entre l'aire de la section transversale de l'âme (100) et l'aire de la section transversale de la couche de gaine en acier inoxydable est supérieur à 1,2.

4. Étiquette RFID (340) selon l'une quelconque des revendications précédentes, dans laquelle les fils métalliques (100) ont un diamètre inférieur à 30 µm.

5. Étiquette RFID (340) selon l'une quelconque des revendications précédentes, dans laquelle l'antenne (360) comprend une couche polymère isolante entourant le fil métallique (100) ou le toron de fils métalliques.

6. Étiquette RFID (340) selon la revendication 5, dans laquelle la couche polymère isolante est fournie par un enroulement d'un ou d'une pluralité de fils (120, 125) ; ou dans laquelle la couche polymère isolante est fournie par un enroulement d'un ou d'une pluralité de rubans polymères.

7. Étiquette RFID (340) selon la revendication 6, dans laquelle le ou les fils (12Q125), ou le ou les rubans sont enroulés autour du fil métallique (100) ou autour du toron avec plus de 1000 tours par mètre de longueur du fil métallique ou du toron.

8. Étiquette RFID (340) selon l'une quelconque des revendications précédentes 6 ou 7,
dans laquelle le fil métallique (100) ou le toron est enveloppé par un premier fil (125) ou par un premier ruban dans la direction S ;
et où le fil métallique ou le toron est enveloppé par un second fil (120) ou par un second ruban dans la direction Z .

9. Étiquette RFID (340) selon la revendication 8, dans laquelle le nombre de tours par mètre avec lequel le premier fil (125) ou le premier ruban est enroulé autour du fil métallique ou autour du toron est le même que le nombre de tours par mètre avec lequel le second fil (120) ou le second ruban est enroulé autour du fil métallique ou autour du toron.

10. Étiquette RFID (340) selon la revendication 5, dans laquelle la couche polymère isolante est fournie par un revêtement polymère.

11. Étiquette RFID (340) selon les revendications 1 à 10, dans laquelle le premier métal est du cuivre ou un alliage de cuivre.

12. Étiquette (330) comprenant :
- un support textile ; et
- une étiquette RFID (340) selon l'une quelconque des revendications précédentes, où l'étiquette RFID (340) est collée sur le support textile.

13. Étiquette (330) selon la revendication 12, dans laquelle l'antenne (360) est intégrée dans le support textile au moyen d'un procédé de tissage, de tricotage ou de broderie.

14. Produit vestimentaire,
comprenant une étiquette RFID (340) selon l'une quelconque des revendications précédentes 1 à 11 ; ou comprenant une étiquette (330) selon les revendications 12 ou 13.
